(19)

Europäisches
Patentamt
European
Patent Office
Office européen
des brevets

(11) **EP 2 464 962 B1**

(12) **EUROPEAN PATENT SPECIFICATION**

(45) Date of publication and mention
of the grant of the patent:
**19.02.2014 Bulletin 2014/08**

(51) Int Cl.:
***G01N 23/20*** (2006.01)

(21) Application number: **10768039.9**

(22) Date of filing: **13.08.2010**

(86) International application number:
**PCT/FI2010/050630**

(87) International publication number:
**WO 2011/018554 (17.02.2011 Gazette 2011/07)**

(54) **METHOD AND SYSTEM FOR ANALYSING DATA OBTAINED USING SCATTERING MEASUREMENTS FROM DISORDERED MATERIAL**

VERFAHREN UND SYSTEM ZUR ANALYSE VON DATEN AUS STREUMESSUNGEN VON FEHLGEORDNETEM MATERIAL

PROCÉDÉ ET SYSTÈME D'ANALYSE DE DONNÉES OBTENUES AU MOYEN DE MESURES DE DIFFUSION EN PROVENANCE D'UN MATÉRIAU DÉSORDONNÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.08.2009 FI 20095843**

(43) Date of publication of application:
**20.06.2012 Bulletin 2012/25**

(73) Proprietor: **Con-Boys OY
00180 Helsinki (FI)**

(72) Inventors:
• **FRANTTI, Johannes
FI-00180 Helsinki (FI)**
• **FUJIOKA, Yukari
FI-00180 Helsinki (FI)**

(74) Representative: **Luoto, Kristian Reinhold et al
Seppo Laine Oy
Itämerenkatu 3 B
00180 Helsinki (FI)**

(56) References cited:
**WO-A2-2005/045726     US-A1- 2003 012 337
US-B1- 6 192 103     US-B2- 7 110 492**

• **DE CASTRO A R B ET AL: "Numerical simulation of small angle scattering (SAXS) for large atomic clusters", JOURNAL OF ELECTRON SPECTROSCOPY AND RELATED PHENOMENA, ELSEVIER SCIENCE PUBLISHERS, AMSTERDAM, NL, vol. 166-167, 1 November 2008 (2008-11-01) , pages 21-27, XP025608796, ISSN: 0368-2048 [retrieved on 2008-05-23]**
• **KEEN D A ET AL: "Reverse Monte Carlo modelling of crystalline disorder; Reverse Monte Carlo modelling of crystalline disorder", JOURNAL OF PHYSICS: CONDENSED MATTER, INSTITUTE OF PHYSICS PUBLISHING, BRISTOL, GB, vol. 17, no. 5, 9 February 2005 (2005-02-09), pages S15-S22, XP020089771, ISSN: 0953-8984, DOI: DOI: 10.1088/0953-8984/17/5/002**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to the study and measurement of disordered material. In particular, the invention relates to a method for analysing data measured using scattering measurements from disordered material. In addition, the invention relates to a system for analysing the properties of disordered material.

**Background Art**

Analytical methods for a crystal structure have developed rapidly in recent years. This can be seen, for instance, in the rapid development of detectors for laboratory diffraction instruments. On the other hand, in the field of neutrons and synchrotron radiation sources, considerable development has taken place, which has made possible the monitoring of structural changes taking place as a function of time. Further, the continuous improvement in the calculation capacity of computers permits the modelling of increasingly large structures.

Numerous scattering and diffraction measurement methods and apparatuses, which can be divided according to the properties of the radiation or sample used, have been developed. Usually, the radiation used is x-ray radiation, neutron radiation, or electron radiation. On the basis of the properties of the sample, the most common division is based on single-crystal samples, polycrystalline powder samples, and on fibres, solutions, surfaces, and membranes. For example, the book International Tables for Crystallography, Volume C: Mathematical, Physical, and Chemical Tables (Kluwer Academic Publishers, Dordrecht, The Netherlands) presents known analysis methods, the most important of which are also described briefly below.

The typical modelling of diffraction data is based on defining the a lattice cell (the smallest parallelepiped-shaped elementary structural element of a crystal, the positions of the atoms it contains, and, from that, the structural factor. In such a case, the vectors parallel to, and of the length of the edges of the lattice cell are selected as elementary translation vectors, the integer multiple sum vectors of which define the lattice of the crystal. In other words, the lengths of the edges of the lattice cell and the angles between the edges form the lattice parameters. Thus, the lattice is an equal-interval point system in space and is not necessarily a realistic assumption in the case of disorderly materials. The crystal is assumed to be infinitely large in size, so that the effect of the surfaces (read defects of the crystal lattice) can be assumed to minor. The effect of the size and shape of the crystal are often taken into account by calculating the Fourier transform of an infinitely large crystal and multiplying it by the Fourier transform of the function defining the size and shape of the crystal. The result provides an estimate of the diffraction in the case in question. However, the method is based on the assumption of a periodic crystal, i.e. deviations from the mean value are either left out of account entirely, or they too are assumed to repeat periodically.

For example, publication US 6430256 discloses a method based on periodicity for analysing thin films on top of a substrate. More specifically, the method concerns a way to analyse a periodic three-dimensional structure in two dimensions. However, the method is only suitable for the analysis of periodic and similar surfaces, which are commensurate with a three-dimensional crystal beneath them. These are considerable practical limitations.

The shape has a considerable effect on the intensity of scattered radiation. For example, the so-called Scherrer equation is after applied to determining particle size from an x-ray diffraction graph. Scherrer's method assumes that the particles are similar spherical structures, so that the estimate is based on the measurement of line widening. If the aforementioned assumption is not realized, the method will be unreliable. The shape also comes into question when analysing thin-film or transilluminated electron microscope samples.

In the so-called Rietveld's method, measurement data measured from a powdery sample. The measurement data is typically the intensity of the radiation scattered form the sample, as a function of angle. At the beginning of the method, a model is assumed, the parameters of which are matched in such a way that the measured diffraction curve and the diffraction curve calculated on the basis of the model are as close to each other as possible. When using Rietveld's method in analysing the x-ray and neutron diffraction curves, the crystal defects are assumed to repeat periodically. A second significant problem in Rietveld's method is the correlation between the parameters used in the structural model, i.e. the effect of two correlated parameters on the intensity is very nearly the same, which prevents the reliable definition of them (and above all of the physical properties depicted by them).

Many amorphous materials, which are assumed to have short-range order, but not long-range order (i.e. translation symmetry), are analysed using the so-called pair-distance distribution function. Such a material is, for example, amorphous silicon dioxide, which consists of two $SiO_4$ tetrahedrons attached to each other at the corners. In practice, in the method the intensity of the scattering corresponding to different types of pairs of atoms is measured (for example, Si-Si, O-O, or Si-O). The intensity of the scattering in affected not only by the number of pairs occurring, but also by the ability of the pair in question to scatter radiation. In practice, the scattered intensity is presented as a function of the distance between the atoms of the pair. However, this information is not sufficient for constructing a three-dimensional structure: the measurement only provides information on the relative number of pairs of atoms. This kind of analysis takes no account of possible differences in different directions in a disordered material, but instead averages them and presents the structure as a one-dimensional function.

Small Angle X-ray Scattering and Small Angle Neutron Scattering measurements are often used for the analysis of particles. At its best, the method can be used to determine the distribution function of a pair, and the shape and size of the particles. In the case of atomic structure, the method has thus the same limitation concerning the distribution function of a pair. In the method, the particles are in a solution, while the method is not suitable for thin films. In addition, the particles should have a maximum diameter of less than a micrometre. Thus, the deficiencies of the method are the same as that above, while, in addition, the method is not suitable for the analysis of thin-film structures.

The simulation of disordered material is known from de Castro et al., Numerical simulation of small angle scattering (SAXS) for large atomic clusters, J. EL. Spec. 166-167 (2008) p.21-27.

In practice, a particularly interesting application is the analysis of the effect of crystal defects. Crystal defects lead to disorder in a material and known analysis methods are not suitable for material with crystal defects. However, in practice many crystal defects cannot be entirely eliminated, as, for example, many point defects correspond to a state of thermodynamic equilibrium. They can, however, be controlled, as semiconductor technology demonstrated. $n$ and $p$-type semiconductors are based on the controlled use of point defects. Also, for example, different types of defects form in the joints of thin films, and their share of the entire volume of the material is considerable.

Publications US 2007/270397 and US 5200910 disclose methods for the analysis of crystalline and thus also ordered materials. According to the publications, indexing is one stage in determining the symmetry of a crystal (more precisely, the space group of the crystal). Though disorder is mentioned in the first publication referred to, all that needs to be mentioned is the fact that the method presented in the publication in question is also suitable for the analysis of slightly disordered crystals. It is significant, that, in such a case, the indexing method tends to seek a crystal nearest to the disordered crystal, arranged with a higher symmetry, i.e. the crystal defect is necessarily periodically repeating.

The publication Welberry, T. R. et al., A Paracrystalline Description of Defect Distributions in Wüstite, Solid State Chem. 117, 398 - 406 (1995), ISSN: 0022-4596, deals with defect distribution in the case of an iron oxide ($Fe_{1-x}O$, in which x is slightly less than one). The method described in the article is based on convolution and the user of Fourier series, and thus on the periodicity of the crystal.

When developing new materials, it is essential to define both the shape and size of the sample and its atomic structure. In particular, the atomic structure acts as a point of departure for new analytical methods. Often existing methods excessively simplify the material being examined, which often leads to the loss of essential information.

In the field, there is thus a need for new and effective analysis methods for a disordered material.

## Disclosure of Invention

It is an object of the present invention to create a new analysis method for a disordered material, which does not suffer from the weaknesses of known analysis methods, and with the aid of which it is thus possible to model, for example, the structure of a crystal-defective material better.

The problem is solved with the aid of the method according to Claim 1, by abandoning the assumption of the periodicity of the material, used in known methods.

In the present method, a scattering or diffraction cluster is defined, which consists of elementary parallelepipeds havingcertain principal axes and positions in space. In the case of an ideal crystal, the positions of the elementary parallelepipeds form a lattice, in which the environment of each lattice point is the same as the environment of any other lattice point whatever. It should be emphasized that, in the present method, the point group is not limited to an ideal lattice, i.e. the points are not necessarily distributed evenly. This is one example of the abandonment of translation symmetry. A second example relates to the edge area, in which there is obviously no translation symmetry. Thus, the term 'lattice' is used below, even when the point group is not distributed at even intervals, due to disorder.

Further, in the method, one or more atoms from the desired set of atom types is defined in each elementary parallelepiped for desired positions, or one or more elementary parallelepipeds are set to be empty. If, in addition, the properties of the desired cluster are defined, with the aid of suitable parameters, as a function of position, a disordered cluster is obtained, which is formed by the said elementary parallelepipeds. In this stage, initial values are given for the parameters. Further, with the aid of the properties of the cluster, the scattering power of the cluster is calculated for the desired radiation (typically x-ray radiation, neutron radiation, and electron radiation).

The invention also relates to a system for analysing a disordered material, according to claim 9.

The processing and storage of the data can be performed on a computer, which can be, for example, a desktop computer, supercomputer, or a computer integrated with the scattering-power measuring apparatus, or otherwise supplied along with such a system. The scattering-power measuring apparatus can comprise an apparatus using, for example, neutron radiation, electron radiation, or x-ray radiation, which are known in the field. Examples include in particular XRD apparatuses, SAXS apparatuses, and power-crystallography apparatuses, as well as variations of them.

A central aspect of the method is that, in each cluster, the atomic structure is allowed to change as a function of position. The shape and size of the cluster are also not restricted. Examples of the former are local variations in the lengths and bond angles between the atoms as well as a definition of the local (atomic level) composition variation, whereas the latter permits the realistic modelling of the size and shape of the sample.

The parameters to be defined preferably depict the dislocation density, the composition distribution as a function of position, the stresses in the material, the distribution of local magnetic moments, or the geometry of the sample. In particular, the parameters can comprise at least one of the following: the positions in space of the elementary parallelepipeds, the edge lengths of the elementary parallelepipeds, the angles between the edges of the elementary parallelepipeds, the number in space of the elementary parallelepipeds, the types of atom and their positions in the elementary parallelepipeds, the dislocation density, the composition distribution of the material as a function of position, the stresses in the material, the structure of the boundary surfaces as a function of position, and the magnetic properties of the material. The boundary surfaces comprise, among other things, the grain boundary, the domain walls, and the joints of the layer structures.

The method takes into account, for example, the effect of a local concentration of crystal defects on the atomic-level structure and in turn on the scattering strength. In practice, this means careful modelling of the intensity of the radiation scattered from the sample. For example, in the case of crystal-defect crystals, the intensity and line-shape of the Bragg reflections contain essential information.

Embodiments of the invention are the subject of the dependent Claims.

Considerable advantages are gained with the aid of the invention.

The method can be applied to the analysis of measurement data collected using different types of apparatus. Examples are the scattering and diffraction measurement methods referred to above.

In the method, the structure of the object being analysed is defined by optimizing the parameters of the model, and it is not restricted to any particular radiation, being thus applicable to modelling the scattering of, among others, electron, x-rays, and neutrons. The scattering power can be calculated for each radiation on the basis of the structure.

An advantage of our method is its applicability to the analysis of both atomic-level structures and macroscopic objects. The method also has no restriction regarding the shape of the scattering elements, i.e. it is applicable to the analysis of spherical particles and of needle-like or planar elements.

As presented above, the method described herein can be used to model data collected by scattering measurements from a disordered material. The parameters of the model, which affect the properties of the cluster being studied, can be, for example, dislocation density, composition distribution as a function of position, strain, the distribution of local magnet moments, and the geometry of the sample.

In this case, the term disordered material refers to a substance in a solid form, which does not have translation symmetry, i.e. the material lacks periodicity in positional space. In such a material, there is no elementary part, by repeating which in each of three directions independent of each other it would be possible to construct the entire material. The degrees of disorder vary and include, among others, amorphous materials in a solid form, and defective crystals. In several applications, the reliable analysis of solely crystal defects is central (grain boundaries, substitute and/or intermediate atoms, dislocations, surfaces and relaxations of atoms relating to them, i.e. point, line, and surface defects). Thus, the method can be applied to structures which consist of either individual clusters formed of several atoms, or combinations of clusters, in which the clusters can be different.

It should be noted that the term 'asymmetric unit' used in crystallography does not express disorder according to the present invention, nor a lack of translation symmetry, instead the term means - nearly the contrary - the smallest part of a crystal, from which the entire crystal can be generated, using symmetry operations on the space group of the crystal. In crystallography, this is way of expressing the short-range and long-range order that unavoidably appears in crystals. Because, in the present invention, the various elementary parallelepipeds have varying properties (as a result of which a disordered cluster forms), the present method differs essentially from methods based on the direct translation of an asymmetric unit (in which the cluster is orderly).

Compared, for example, to the translation-symmetrical methods according to publications US 2007270397, US 5200910, and US 6430256, the method according to the present invention concentrates precisely on analysing materials, which do not have translation symmetry, and as a result of the analysis provides information on the disorder itself. Thus, the methods according to them differ significantly, not only in terms of technique, but also in application form the method we present, in which the disorder itself is examined.

Compared to the method according to the aforementioned article by Welberry et al., the present method is based on the use of three sum functions $c(i; \kappa; \lambda)$, $c(j; \kappa; \lambda)$ and $c(k; \kappa; \lambda)$, as will be explained in greater detail hereinafter. Thus, it differs completely from the method disclosed in the aforementioned article. The advantage of the present method is a structural model for a disorderly material, i.e. it contains information on disorder. One example is a domain wall in a ferroelectric material. Another example is the joints of multi-layer thin films, which it would be very difficult to analyse using the method of the publication of Welberry et al. The material to be examined is divided into prisms N, which are referred to as elementary parallelepipeds. The division is made in such a way that the parallelepipeds fill the material precisely once. The lengths of the edges of the various elementary parallelepipeds and the angles between the edges are not necessarily all the same. If they are, a lattice cell according to crystallography can be selected as the elementary parallelepiped.

The lengths (*a, b,* c) of the elementary parallelepiped and the angles (a, $\beta$, y) between the edges are the lattice parameters of a crystalline material, i.e. in a general case there are six lattice parameters.

The terms the properties of a cluster refers to experimentally determinable physical variables. These are, among other things, the aforementioned parameters of the model. In a special case, the cluster defined according to a preferred embodiment can be periodic, though practical applications relate to cases, in which the cluster is non-periodic in at least one dimension, and can be also in all three dimensions.

The scattering power determines how much (a relative share) the material in question scatters radiation coming to it, per unit of length. Scattering power is often defined only in the desired directions.

In the following, various embodiments and advantages of the invention are examined in greater detail with reference to the accompanying drawings.

## Brief Description of Drawings

Figure 1 presents schematically as a flow diagram the implementation of the present method, according to one embodiment.

Figures 2a and 2b present different types of crystal defect.

Figures 3a and 3b present schematically respectively a situation corresponding to a substitute solution modelled using traditional methods and modelled according to the invention.

Figure 4 presents an example of a joint between two different phases, at the atomic level.

Figure 5 presents schematically a magnetically disordered material.

Figures 6a and 6b present two different types of domain wall at the lattice level.

Figures 7a and 7b present schematically ferromagnetic domain walls.

Figure 8 presents two boundary surfaces that often appear in multi-layer structures.

Figure 9 presents a perspective view of the structure of perovskite $ABO_3$.

Figure 10 presents the lattice parameters of the structure of perovskite $ABO_3$, obtained using the present method and through the measurement results.

Figure 11 presents a schematic diagram of a domain wall.

Figure 12 presents the results obtained in the analysis of a domain wall using the present method.

Figure 13 presents the mixing layer between two separate layers.

## Detailed Description of Embodiments

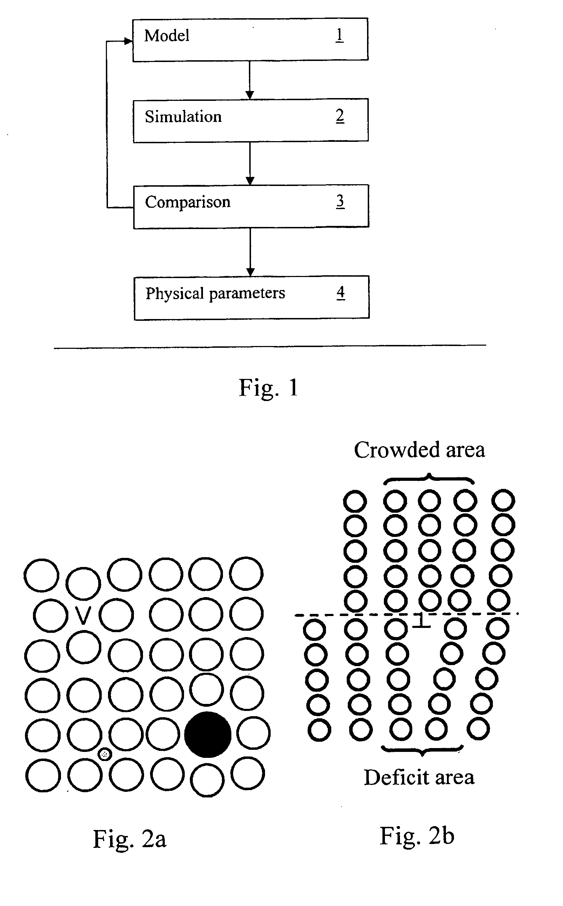

With reference to Figure 1, the present analysis method for disordered materials is based on a model (stage 1), which takes account of the atomic-level structure of the disordered material and the geometry of the sample. Simulated scattering and diffraction measurement data are calculated on the basis of the model and the initial values (stage 2). After this, it is calculated whether the difference between the calculated and measured data is less or greater than a preset value (stage 3), and the model is updated iteratively (stage 3 -> stage 1) in such a way that it corresponds to the data measured from the material in question. Once a sufficient correspondence has been found, parameters are obtained as a result, which have a physical significance (stage 4), and which thus help to explain the measurement results.

Figure 2a shows schematically two examples of situations, in the analysis of which the present invention can be applied. Figure 2a shows a lattice, in which there are a vacancy (V), an intermediate atom (the small circle), and a substitute atom (the large solid circle). In both cases, the defects cause the distortion of the latterice and, in turn, the lattice to lack translation symmetry.

When applying the method, the effect of the measuring instrument is taken into account in the line shapes. This concentrates on determining the proportion defining the intensity from the sample. For reasons of clarity, we also leave out of account well-known factors affecting the measurement data. These include the background, the temperature factor, and absorption. However, including them is a relatively simple operation for one skilled in the art. Similarly, taking the so-called trigonometric intensity factors (for instance, the polarization factor and the Lorentz factor) into account is relatively simple.

In the following, a detailed example is given of the practical implementation of the invention.

1. In the first stage, the cluster is defined by giving the positions in space of the N elementary parallelepipeds. For this purpose, a set of co-ordinates is defined. Each parallelepiped is referred to by the indices *i, j,* and *k,* which correspond to the co-ordinate axes x, y, and z. The indices *i, j,* and *k* are given the values 1, ... $N_x$, 1, ... $N_y$, and 1, ... $N_z$. The elementary parallelepipeds fill the cluster precisely once. At this stage, the initial values (which are updated in later cycles, if the condition set in section 6 is not met) for the lengths of the sides of the elementary parallelepipeds and the angles between the sides. The initial values can be obtained, for example, from the literature. These are the parameters of the model. At this stage, the elementary parallelepipeds can be assumed to be the same, though this is not essential. $N_x$, $N_y$, and $N_z$ can also be set as parameters.

2. The atoms are placed in each elementary parallelepiped. At the same time, the positions of the elementary parallelepipeds are indexed, i.e. the co-ordinates of the positions at which the atoms can lie. These co-ordinates too are parameters of the model. These positions are referred to using the index $\lambda$. The positions act as initial values for the locations of the atoms. The atom types are referred to using the marking $\kappa$. The elementary parallelepiped can also be empty. This can be exploited when assembling various clusters.

3. For each level *i = constant* the number of atoms of the atom type $\kappa$ at the position $\lambda$ is defined, which is referred to using the function $c(i; \kappa; \lambda)$. The functions $c(j; \kappa; \lambda)$ and $c(k; \kappa; \lambda)$ are formed correspondingly.

4. The properties of the cluster are expressed as functions of the functions $c(i; \kappa; \lambda)$, $c(j; \kappa; \lambda)$, and $c(k; \kappa; \lambda)$. These properties are, among others, the dimensions of the elementary parallelepiped (the lengths of the edges and the angles between the edges) and the magnetic properties. This is a central feature of the method: the properties of the material, including the atomic-level structure, are expressed with the aid of three functions, and thus the method provides information on the disorder itself. Disorder, such as a domain wall, dislocation, or a joint formed between a thin film and a substrate, can be constructed with the aid of the said functions.

5. After this, either

(a) the scattering power $I_N$ of the cluster is calculated for the radiation (such as x-ray radiation or neutron radiation) in question, or

(b) the material is assumed to consist of the clusters in question (in which case the cluster forms the crystallographic lattice cell), in which case the calculation of the intensity of the scattered radiation returns to the case of a crystalline material. The square of the absolute value of the structural factor of the cluster is then calculated.

6. If the method is applied to the modelling of the measurement data, the difference between the measured and modelled data is calculated. If the difference is greater than a preset value, the procedure continues to the next stage. Otherwise, the parameters of the model are output.

7. On the basis of an optimization algorithm, such as the Levenberg - Marquardt method, new values are given for the parameters and a return is made to stage 1. In practice, the function to be minimized *M* is defined, which can be, for example, $M = \sum_i w_i [y_i (\text{measurement}) - y_i (\text{model})]^2$, in which the summing index i runs over all the measurement points, $y_i$ (measurement) is the measured (determined experimentally) measurement value (often the intensity) corresponding to the point *i*, $y_i$ is the value calculated on the basis of the model, corresponding to the point *i*, and $y_i$ is a preselected weighting coefficient, for example, $w_i = [y_i (\text{measurement})]^{-1}$. Thus, the smallest square sum is sought, which can be done iteratively, using, for example, the Levenberg - Marquardt method.

If the intensity calculated on the basis of the model differs from the measured intensity by more than a predefined value, the sample can be tilted; in such a way that information is obtained on the reason for the deviation. For example, dislocations can cause certain reflections to appear weaker than they would appear in a material without dislocations. The situation can then be investigated by tilting the sample, in such a way that the intensity of the scattered radiation can be measured from other planes too.

If the reflection scattered from the sample is very weak, and the shape of the profile cannot be reliably determined, the measuring time can be increased. Often the signal-noise ratio is directly proportional to the square of the measuring time.

The settings of the instrument's slits can also be altered to achieve the necessary resolution and signal-noise ratio. For example, dislocations affect not only the intensities of the reflections, but also the line widening. The line widening caused by dislocations increases in direct proportion to the tangent, $\tan(\Theta)$, of the Bragg reflection angle $\Theta$.

The publication L. S. Levin and G. Kimmel: Quantitative X-ray Diffractometry. Springer-Verlag Inc., New York (1995), pp. 264 - 266 describes examples of the effects of linear defects (dislocations) and planar defects on a diffraction curve.

The following is a list of examples of cases, in the detailed examination of which traditional methods may be inadequate, and in which the use of the present method can create a more accurate structural analysis.

**Substitute solutions and composition gradients.** As a result of atomic-level composition variations in a substitute solution, the scattering amplitudes are not distributed evenly. In addition, local composition variation in a substitute solution causes local strains (positive or negative), which affects the scattering strength. A corresponding situation appears in the case of a composition gradient. In general, it is therefore possible to say that the bond lengths and angles between atoms vary as a function of position.

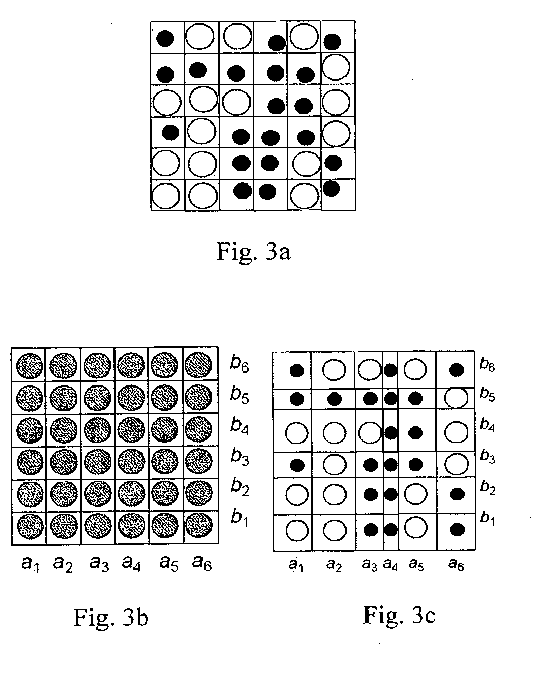

Figure 3a shows schematically a lattice corresponding to a solid substitute solution, in which there are two types of atom. The traditional models average a lattice of this type, in the manner of Figure 3b, by leaving the disorder out of account. In the present method, the lattice parameters $a_i$ and $b_i$ are allowed to change, in which case a more accurate approximation of the real structure of the lattice is obtained.

**Dislocations.** For example, the presence of dislocations in a metal, movements, and interactions are to a great extent responsible for the plasticity of metals and the hardening and embrittlement appearing in connection with working. Dislocation is a distribution of local atom shifts surrounded by a defect line.

**Domain walls.** As a second example, reference can be made to ferroelectric ceramics, the understanding of which requires not only the determining of the average positions of the atoms, but also the definition of the movements of the domain boundaries created by an electric field or external pressure.

Ferroelectric ceramics consist of numerous elementary areas (domains) separated by walls. In their simplest form, the domains differ from each other only in terms of their orientation, i.e. one domain can be obtained from another by means of a suitable symmetry operation (which can be, for example, a rotation through 180 degrees). In the case of these walls (domain boundaries), the distances between the atoms different from the average. In addition, the domain boundaries often remain caught on impurity atoms.

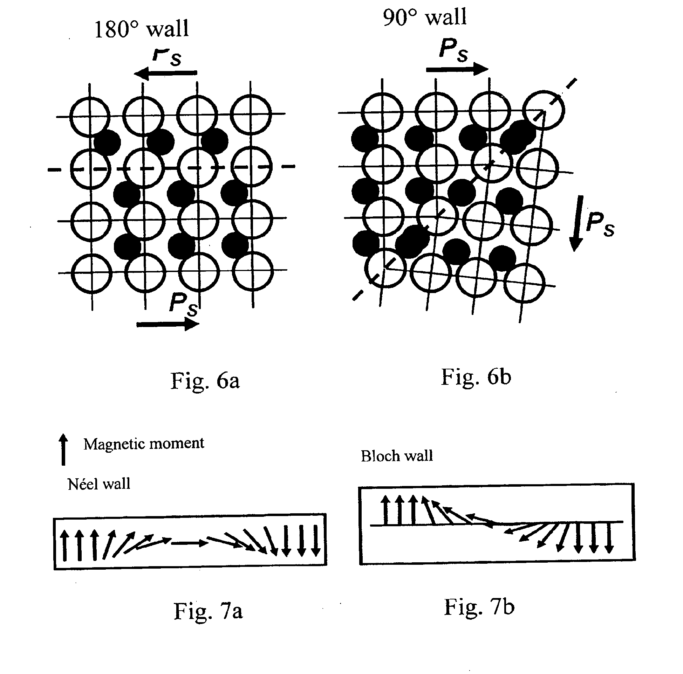

Figure 6a shows an example of a 180-degree domain wall and Figure 6b an example of a 90-degree wall, due to which the material loses long-range order.

For their part, Figures 7a and 7b show examples of a ferromagnetic Néel and Bloch domain wall.

**Particles.** A third example is the case of small particles. Already using present computing capacity it is possible to model the scattering from small particles (diameter of less than 20 nm) using our method. In such cases, the share of the surfaces is significant: on the surfaces the distances between the atoms differ from the distance of the atoms inside a particle and, in addition, they often contain impurity atoms, or even an entirely other phase.

**Thin films and multi-layer structures.** A fourth example of current interest is a layered thin-film structure, which consists of one or more structures on top of each other. In such a case, changes in the composition and in the composition of the atoms' bond lengths in the thickness direction and in the atomic structure should be taken into account. In the analysis of these, the finite thickness of the films (the thickness of individual layers is often in the order of 1 ... 2 nm) and the stresses or dislocations that unavoidably arise between the layers determine to a great extent the properties of the structure. Examples are so-called epitaxial thin films, which are grown on top of a separate crystal substrate. Typically the dislocations form in a case, in which the difference between the lattice dimensions of the films is so great that the stresses are no longer energetically advantageous. The thickness of the film also affects the matter: as the thickness increases, the creation of dislocations becomes preferable to stresses. For example, in light-emitting diodes (LEDs) a solid solution of gallium arsenide and gallium phosphide is used. Their operation is based on a *p-n* bond, which influences the forward direction voltage. Such a structure is an example of a case, in which both a composition gradient and a joint surface appear.

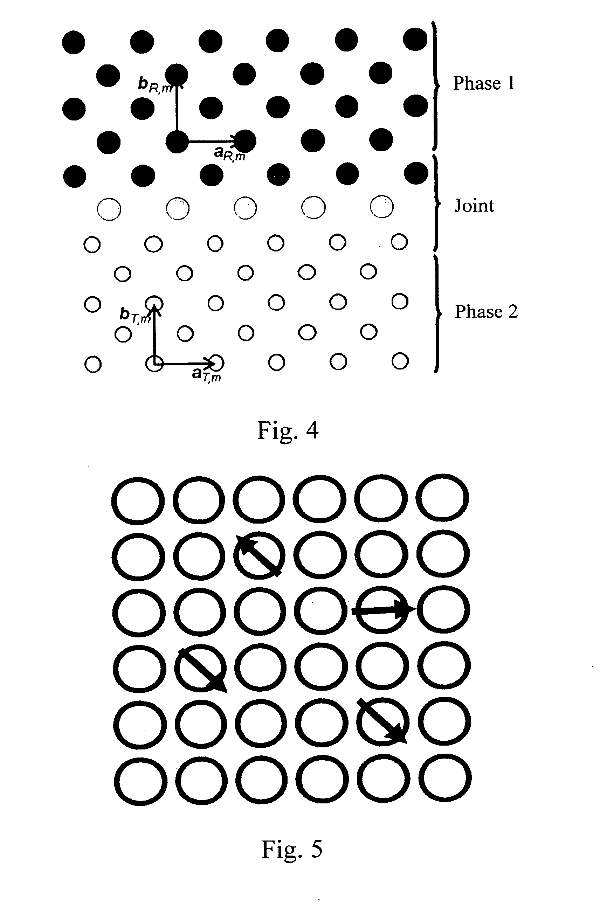

Figure 4 shows a layered structure, which comprises two separate phases, and joint layer between them, due to which the structure cannot be described with the aid of similar lattice cells, i.e. in this sense the structure is disorderly. The present invention can be applied in the modelling of structures of this kind.

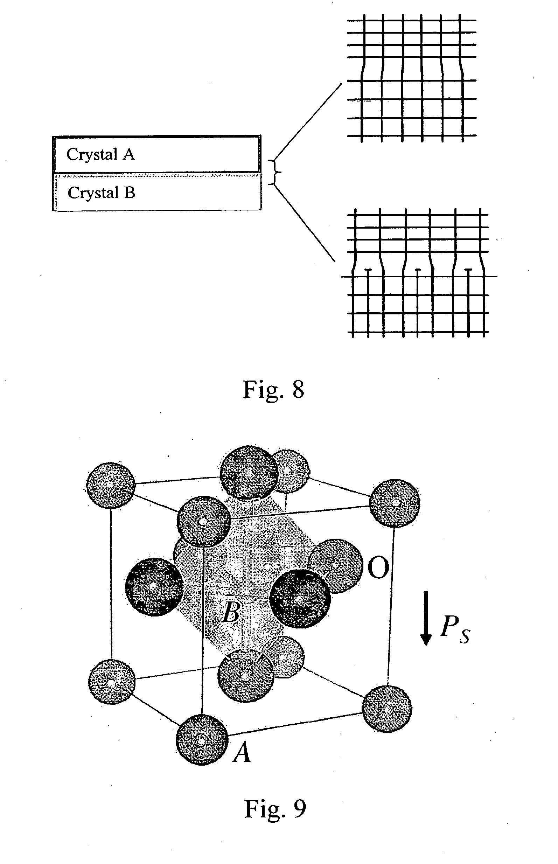

Figure 8 shows, in turn, two different types of boundary surface of a multi-layer structure, at the lattice level, which cause disorder in the material.

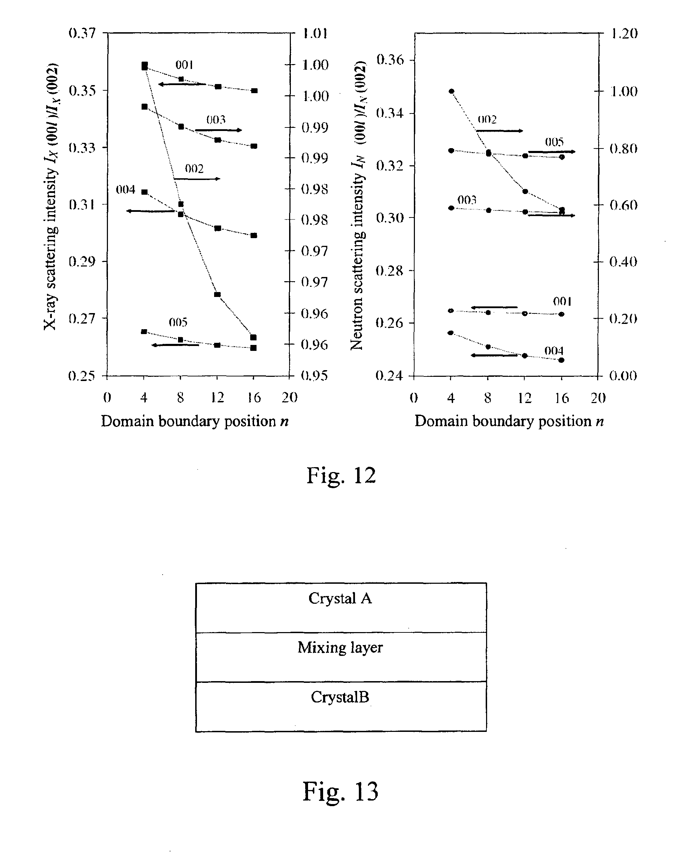

Figure 13 shows a mixing layer formed between two different layers. A simple example of a mixing layer is a substitute solution layer formed between a lead titanate and a lead zirconate layer, in which the Ti and Zr content changes as a function of the thickness of the mixing layer when moving from one layer to the other.

**Magnetic materials.** The method can be generalized to the case of magnetic scattering. For example, the neutrons interact with atoms possessing a magnetic moment (for example, compounds containing 3d transition metals), which can be detected using neutron-scattering measurement. In this case, the applications of the method are so-called Bloch walls, which separate ferromagnetic elementary areas, i.e. domains, arranged in different directions.

Figure 5 shows an example of a magnetic spin-glass material, which lacks long-range order. Such a material is, for example, a Cu-Mn substitute solution. When studying such a material with the aid of neutron radiation (neutrons have a magnetic moment), it is possible to obtain information on the nature of magnetism: the neutrons scatter from the lattice formed by the magnetic spins, which can be modelled in turn with the aid of the present method.

It should be noted that the example situations depicted above and in the accompanying Figures 1 - 8 do not exclude each other, but often appear simultaneously in material lattices.

The practical implementation of the invention is illustrated next, with the aid of two detailed examples.

**Example 1: analysis of a substitute solution (lead zirconate titanate)**

Lead zirconate titanate [$Pb(Zr_xTi_{1-x})O_3$, PZT] is a technologically important material that is ferro-, pyro-, and piezoelectric at room temperature, when x < 0.9. Its atomic-level structure is often depicted by assuming that the material has a perovskite structure. Figure 9 shows the $ABO_3$ perovskite structure. In the case of PZT, the ion marked by *A* is Pb and the ion marked by *B* is either Zr or Ti. The electrical polarization $P_S$ causes the ions ($O^{-2}$, $Ti^{+4}$, and $Pb^{+2}$) to move away from a symmetrical position. In this case, the electrical polarization points in the direction of the c axis. To be more precise, the material is not a crystal, and the Zr and Ti atoms are random at the position in question and thus the material does not have translation symmetry.

Traditionally, a case of this kind has been dealt with in structural analyses by placing an imaginary atom, the scattering amplitude of which is the scattering amplitude of Zr and Ti atoms weighted with the composition, as a *B* cation. In addition, the lattice points have been assumed to be evenly distributed, i.e. translation symmetry has been assumed. However, the method has its weaknesses, and cannot, due to its initial assumptions, take into account local variations in composition and the related local distortions of the crystal. This has, in turn, often led to erroneous interpretations both when analysing the material and when modelling its piezoelectric properties: familiarity with the atomic-level structure is a point of departure for these examinations too.

Initial assumptions

The lattice parameters of crystalline $PbTiO_3$ $a_T = b_T = 3.9000$ Å and $c_T = 4.1500$ Å, as well as the lattice parameters of crystalline $PbZrO_3$ $a_Z = b_Z = c_Z = 4.138$ Å, act as the point of departure. The values are initial values and correspond to the values given in the literature for the materials $PbTiO_3$ and $PbZrO_3$. For the x-ray and neutron scattering measurements, the positions of the oxygen ions, the *B* cations, and the lead ions relative to the lattice point *i, j, k* must be known, which for reasons of simplicity are assumed to be constants (the values are close to the corresponding values of $PbTiO_3$). The positions and atoms are indexed as follows: Position $\lambda = 1$ is point (0, 0, 0), position $\lambda = 2$ is point (1/2, 1/2, 0.55), position $\lambda = 3$ is point (1/2, 1/2, 0.10), position $\lambda = 4$ is point (0, 1/2, 0.60), and position $\lambda = 5$ is point (1/2, 0, 0.60). Atom $\kappa = 1$ is lead (Pb), $\kappa = 2$ is titanium (Ti), $\kappa = 3$ is zirconium (Zr), $\kappa = 4$ is oxygen (O).

Table 1 gives the element-specific parameters using in x-ray and neutron scattering calculations for x-ray radiation, *f* (the scattering amplitudes are calculated using the *approximation* $f = z + \sum_1 a_i exp((-b_1 s^2))$, in which s = sin($\Theta$) =$\lambda$), for anomalous dispersion ($f_1$ and $f_2$), as well as the neutron scattering lengths $b_0$. $\Theta$ is the scattering angle and $\lambda$ is the wavelength of x-ray radiation. The anomalous dispersion parameters come into question close to the absorption boundary of x-rays. $f_1$ and $f_2$ referred to below correspond to Cu $K_\alpha$ radiation ($\lambda$ = 1.540562 A). The values are taken from the publication International Tables for Crystallography, Volume C: Mathematical, Physical, and Chemical Tables (Kluwer Academic Publishers, Dordrecht, The Netherlands).

**Table 1**

| Parameter | Pb | Zr | Ti | O |
|---|---|---|---|---|
| $b_0$ | 9.405 | 7.16 | -3-370 | 5.803 |
| s | 13.4118 | 2.06929 | 1.28070 | 0.250800 |
| $a_1$ | 31.0617 | 17.8765 | 9.75950 | 3.04850 |
| $b_1$ | 0.690200 | 1.27618 | 7.85080 | 13.2771 |

(continued)

| Parameter | Pb | Zr | Ti | O |
|---|---|---|---|---|
| $a_2$ | 13.0637 | 10.9480 | 7.35580 | 2.28680 |
| $b_2$ | 2.35760 | 11.9160 | 0.500000 | 5.70110 |
| $a_3$ | 18.4420 | 5.41732 | 1.69910 | 1.54630 |
| $b_3$ | 8.61800 | 0.117622 | 35.6338 | 0.323900 |
| $a_4$ | 5.96960 | 3.65721 | 1.90210 | 0.867000 |
| $b_4$ | 47.2579 | 87.6627 | 116.105 | 32.9089 |
| $f_1$ | -4.075 | -0.186 | 0.219 | 0.049 |
| $f_2$ | 8.506 | 2.245 | 1.807 | 0.032 |

Method

1. In the first stage, the size of the cluster is given, i.e. the number of its elementary parallelepipeds. In the case of the example, we assume a cluster with the shape of a rectangular prism, which is divided into an $N_x$ x $N_y$ x $N_z$ rectangular prism. In this case, $N_x = N_y = N_z = 20$, i.e. the cluster contains 8000 lattice points (and 40 000 atoms). The cluster's elementary parallelepipeds are referred to by the indices $i, j, k$, which can each be given the value 1, 2, ..., 20. The method is not, as such, restricted to rectangular prisms, but is also applicable to the examination of clusters of other shapes, permitting, for example, the examination of needle-like structures.

2. In the second stage, a lead atom is placed at position 1 of each elementary parallelepiped, a zirconium atom with a probability of x and a titanium atom with a probability of 1 - x at position 2. In this case, the help of a programming language random generator is used. It should be stated that randomness is a characteristic feature of PZT. An oxygen atom is placed at positions 3, 4 and 5.

3. In the third stage, the number of Zr atoms is defined for each plane i = *constant* (in which *constant* is given the values 1, 2, ..., 20). The same is repeated for the planes j = *constant* and the *planes k = constant.* The numbers of Zr atoms of the planes in question are $c(i, 3, 2)$, $c(j, 3, 2)$, and $c(k, 3, 2)$.

4. In the fourth stage, the lattice constants $r_x(i)$, $r_y(j)$, and $r_z(k)$ are defined for each lattice point $i, j, k$. This is the central part of the method and takes into account local variations in the lattice dimensions. The lattice dimensions are functions of the functions c. Now

$$r_x(i) = a_T + (a_Z - a_T)c(i, 3, 2)\text{-}(N_y N_z)$$

$$r_y(j) = b_T + (b_Z - b_T)c(j, 3, 2)\text{-}(N_z N_x)$$

$$r_z(k) = c_T + (c_Z - c_T)c(k, 3, 2)\text{-}(N_x N_z)$$

For simplicity, we have assumed that the edges of the elementary prism are only functions $c(i, 3, 2)$, $c(j, 3, 2)$, and $c(k, 3, 2)$, though a linear function can also be replaced with a more complex function. According to the initial assumption, either Zr or Ti is always in the position 2. Thus, if $c(i, 3, 2)$, $c(j, 3, 2)$, and $c(k, 3, 2)$ are known, then $c(i, 2, 2)$, $c(j, 2, 2)$, and $c(k, 2, 2)$ will also be known. In the most general cases, it will also be necessary to use the sum functions of the other atom types: if, for example, in addition to what is now described, at the position $\lambda = 5$ there could also be not only oxygen ($\kappa = 4$), but also vacancies, $r_x(i)$, $r_y(j)$, and $r_z(k)$ would also correspondingly depend on the functions $c(i, 4, 5)$, $c(j, 4, 5)$, and $c(k, 4, 5)$ In addition, we have assumed that the same composition variation will cause the same change, in both $a_x$ and $a_y$. If necessary, this assumption can be abandoned. It was stated earlier that the method provides information about disorder by itself In the case of the present example, it appears from the lattice dimensions presented above. In order for the difference between a typical and the present method to be made apparent, consider a large cluster, in which there is only one Zr atom. In a typical method, this Zr atom would be distributed evenly over the entire cluster (according to the demand of translation symmetry) and there would be no information on the position and the more precise nature of a defect, whereas in the present method the position of the defect (a Zr atom) and its effect is given as the c functions of the functions. For example, the lattice dimensions define a local defect providing information on, among other things, the location of the defect and the angles and lengths of the bonds around it.

5. In the fifth stage, the scattering power $I_N(s)$ of the cluster in the direction s is calculated. This can be done either

(a) using the formula $I_N(s) = \sum^N_{nn'} f_n f_{n'} \cos[2\pi \cdot (r(n) - r(n'))]$,
in which N is the number of atoms in the cluster, $f_n$ and $f_{n'}$ are the scattering amplitudes of the atoms n and n', r(n) and r(n') are the position vectors of the atoms n and n' and s is defined with the aid of the unit vectors So and S parallel to the incoming and scattered radiation (wavelength of both $\lambda$): s = (S - $S_0$)/$\lambda$ or

(b) by assuming the material to be composed of the clusters in question (in which case the cluster forms a crystallographic lattice cell), when the calculation of the diffraction intensity returns to the case of a crystalline material. The square of the absolute value of the structural factor of the cluster is then calculated

$$F_{hkl} - \sum^N_{n=1} f_n \exp[-2\pi(hr_x(n) + kr_y(n) + lr_z(n))]$$

Here, $r_x(n)$, $r_y(n)$, and $r_z(n)$ are the components of the position vector of the atom n, and h, k, and l are the so-called Bragg reflection indices.

6. The above stages are repeated according to the statistical demands.

The processing given above is directly valid for x-rays. In the case of neutron scattering, the scattering amplitudes are replaced with scattering lengths (see Table 1).
It can be seen that the boundary cases x = 0 and x = 1 correspond to lead titanate and lead zirconate, as they should. It can also be seen, that the dimensions of the rectangular prism in the directions of the x axis and the y axis are equal. This is a result of the aforementioned assumption, according to which the same composition variation creates the same change in both $a_x$ and $a_y$. Thus, the model can be used, if desired, to preserve long-range symmetries (which can be a requirement for the equality of the dimensions of the cluster parallel to the x and y axes), or they can then be abandoned.

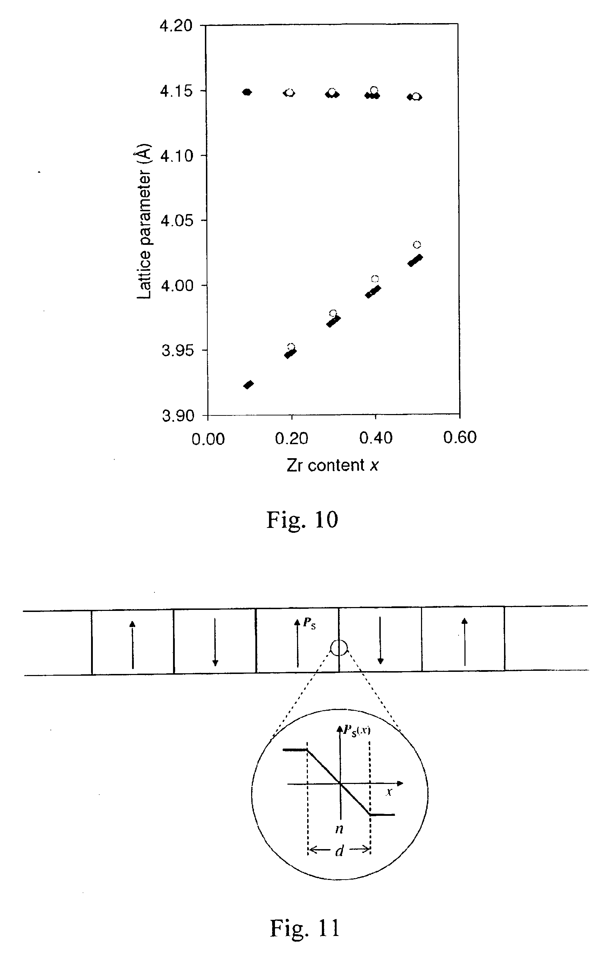

Figure 10 shows the lattice constants (squares) of titanium-rich PZT defined using the above method as the x function of the composition and compared to the experimentally determined values (circles). It can be seen that the difference between the experimental and the model is small, if it is taken into account that none of the parameters of the model have been fitted. The figure also illustrates the significance of composition variation: each average composition has been given the mean value of ten cases, as well as the smallest and largest composition value. As the binomial distribution requires (which the Zr and Ti ion distribution follows quite well), the value of the variation increases between 0 ... 0.5.

**Example 2: Two-dimensional crystal defect (analysis of an 180° domain wall in lead titanate)**

A ferroelectric material consists of domains, inside which, except for the edge areas, electrical polarization is uniform as a function of position. The direction of the electrical polarization is determined by the atomic structure: for example, the electrical polarization direction of tetragonal lead titanate is the same as the direction of the tetragonal c axis. Am estimate can be calculated for electrical polarization p using the equation $p = V^{-1} \sum q_i r_i$, in which $q_i$ is the charge of the ion i (assuming to be a point), $r_i$ is the position of the ion i in the lattice cell and V is the volume of the lattice cell. This is illustrated by Figure 9: the oxygen octahedron and the cation inside it have moved upwards (the oxygen ions are not located at the centre point of the face, nor the B cation in the centre of the prism). Electrical polarization is a consequence of this. Figure 11 is a schematic presentation of a 180-degree domain wall. In the figure, the arrows show the direction of the electrical polarization, which first decreases linearly at the domain wall to zero and changes its sign halfway along the domain wall. The thickness of the domain wall is d and the position n (in the lattice dimensions). In this case, the deviation from translation symmetry appears at the domain wall. As the dimensions of the material decrease, the relative share and significance of the domain wall increase.

Initial assumptions

The lattice parameters $a_T = b_T$ = 3,9000 Å and $c_T$ = 4,1500 Å of crystalline $PbTiO_3$ act as the point of departure. The values are initial values and correspond to the values for $PbTiO_3$ given in the literature.

For x-ray and neutron scattering measurements, the relative positions of the oxygen ions, the titanium ions, and the lead ions relative to the lattice points $i, j, k$ should be known. The positions and atoms are indexed as follows: Position $\lambda$ = 1 is the point (0, 0, 0), the position $\lambda$ = 2 is the point (1/2, 1/2, $z_{Ti}(i)$, the position $\lambda$ = 3 is the point (1/2, 1/2, $z_O(i)$), the position $\lambda$ = 4 is the point (0, 1/2, 1/2+$z_O(i)$), and the position $\lambda$ = 5 is the point (1/2, 0, 1/2+$z_O(i)$). Now $z_{Ti}(i)$ = 0.55 at the left-hand edge of the domain wall and decreases linearly to the value $z_{Ti}(i)$ = 0.45 at the right-hand edge of the domain wall. Correspondingly, $z_O(i)$ = 0.10 at the left-hand edge of the domain wall and decreases linearly to the value $z_O(i)$ = -0.10 at the right-hand edge of the domain wall. The method described in the section '**Detailed Description of Embodiments**' is applied. Thus, at the domain wall, changes take place in the positions of the atoms and thus the atom type is defined by not only the element type, but also by the values of the parameters $z_{Ti}$ and $z_O$. For example, two titanium atoms at the position $\lambda$ = 2, which have differing $z_{Ti}$ values, are regarded as being different atom types. Correspondingly, two oxygen atoms at the position $\lambda$ = 5, which have differing zo values, are regarded as being different atom types. Further, oxygen atoms at the positions $\lambda$ = 4 and $\lambda$ = 5, which have the same $z_O$ values, are the same atom type. In the examples in question, we have, for reasons of illustration, assumed that $z_{Ti}$ and $z_O$ change only in direction of the x axis, which is shown with the corresponding markings $z_{Ti}(i)$ and $z_O(i)$. Naturally, both $z_{Ti}$ and $z_O$ can also change in the directions of the $y$ and/or z axes, and the dependence relationship could be shown in a more complex manner. Now, it is practical to define 3$N$, atom type $\kappa$. The following choices are made: atom types $\kappa$ = 1,2... $N_x$ are lead atoms, atom types $\kappa = N_x$ +1, $N_x$ +2... 2$N_x$ are titanium atoms, and atom types $\kappa = 2N_x$+1, 2$N_x$+2...3$N_x$ are oxygen atoms. The functions $c(i; \kappa; \lambda)$, $c(j, \kappa; \lambda)$, and $c(k; \kappa; \lambda)$ are formed, which as functions can express, for example, spontaneous polarization.

Figure 12 shows the effect of a 180-degree domain wall on the square of the absolute value of the structural factor (to which intensity is directly proportional), calculated using the present method. The effect of a 180-degree domain boundary (width d = 4 lattice dimensions and the position of the centre point of the domain wall n lattice dimensions) on (a) the x-ray (00$l$) scattering intensities and (b) the neutron scattering intensities of $PbTiO_3$. All the intensities are divided (002) by the intensity of the reflection. The wall is parallel to the $yz$ plane and divides the cluster being examined into two parts, in which the spontaneous polarization faces in the direction of the positive and negative z axis. Correspondingly, the clusters used contain 36 x 36 x 36 elementary prisms, and each elementary prism contains the atoms of one formula unit. As can be seen, the relative changes when using x-rays and neutrons differ from each other (note especially (002) the rapid weakening of the reflections particularly in the case of neutron scattering).

**Claims**

1. A method for analysing a disordered material using a computer, the method comprising:

   a) defining a scattering cluster, which consists of elementary parallelepipeds, which have defined principal axes and positions in space,
   b) defining one or more atoms from a desired set of atom types for each elementary parallelepiped, into desired positions, or one or more elementary parallelepipeds are set to be empty, and
   c) defining number functions $c(i; \kappa; \lambda)$, $c(j; \kappa; \lambda)$, and $c(k; \kappa; \lambda)$ for an atom type $\kappa$, in which $i, j,$ and $k$ are plane indices of the elementary parallelepipeds, $\kappa$ is the atom type, and $\lambda$ the position,
   d) defining desired properties of the cluster as functions of the number functions of the atoms of the said atom types $\kappa$, which are given initial values,
   on storage means of the computer, so that after the stages a) - d) the elementary parallelepipeds form a disorderly cluster, and the method further comprising
   e) calculating the scattering power of the cluster for desired radiation with the aid of the properties of the cluster, and
   f) comparing the calculated scattering power to a value obtained by measuring the scattering power of a sample, in order to determine the need of adjustment of at least one parameter of said scattering cluster in steps a-d if the difference between the calculated and measured scattering power is greater than a predefined value, to achieve an analysis result for said disorderly material.

2. A method according to claim 1, wherein said at least one parameter in the steps a-d is adjusted if the difference between the calculated and measured scattering powers is more than said predefined value.

3. A method according to claim 1 or 2, wherein said parameters are stored on the storage means if the difference between the calculated and measured scattering powers is less than said predefined value.

4. A method according to claim 1 or 2, wherein said parameters comprise at least one of the following: the positions in space of the elementary parallelepipeds, the lattice parameters of the elementary parallelepipeds, the edge lengths of the elementary parallelepipeds, the angles between the edges of the elementary parallelepipeds, the number in space of the elementary parallelepipeds, the types and positions of the atoms in the elementary parallelepipeds, the dislocation density of the atoms, the composition distribution of the atoms as a function of position, the positions of the atoms on the boundary surfaces, the stresses in a cluster, and the magnetic properties of a cluster.

5. A method according to any of the above claims, wherein the cluster properties defined in stage d) comprise at least one of the following:

   - lattice constants of the elementary parallelepipeds,
   - magnetic properties of the elementary parallelepipeds.

6. A method according to any of the above claims, comprising defining in stage c) the number of each atom type at each position on the space planes parallel to the planes defined by the principal pairs of axes of the elementary parallelepipeds.

7. A method according to claim 1, comprising tilting in a predefined manner, if the difference between the measured and calculated scattering power is greater than a predefined value.

8. A method according to claim 1, comprising repeating the measurement of the sample using altered measurement parameters, if the difference between the measured and calculated scattering power is greater than a predefined value.

9. An apparatus for analysing a disordered material, comprising:

   - means for measuring scattering power from a sample containing a disordered material,
   - storage means for storing the measured scattering power,
   - a data-processing unit, which contains means for modelling said sample and which contains, or to which can be input as parameters
   - data on a scattering cluster, which consists of elementary parallelepipeds, which have defined principal axes, positions in space, and edge lengths,
   - data on one or more atom or empty atom position belonging to an elementary parallelepiped, with the aid of the number functions $c(i; \kappa; \lambda)$, $c(j; \kappa; \lambda)$, and $c(k; \kappa; \lambda)$, in which i, j, and k are the plane indices of the elementary parallelepipeds, $\kappa$ is the atom type, and $\lambda$ the position, and
   - desired properties of the cluster as a function of the number functions of the atoms of atom type $\kappa$, in such a way that the elementary parallelepipeds form a disorderly cluster,

   and which data-processing unit is further adapted to calculate the scattering power of the cluster for a desired radiation based on the properties of the cluster, to read said measured scattering power of a sample from the storage media and to compare it to the calculated scattering power, in order to determine the need of adjustment of at least one parameter of said scattering cluster if the difference between the calculated and measured scattering power is greater than a predefined value, to achieve an analysis result for said disordered material, and to store this on the storage media.

10. An apparatus according to claim 9, wherein the data-processing unit is adapted to automatically adjust said at least on parameter and recalculate the scattering power if the difference between the calculated and measured scattering power is greater than said predefined value.

11. An apparatus according to claim 10, wherein the said parameters comprise at least one of the following: the positions in space of the elementary parallelepipeds, the lattice parameters of the elementary parallelepipeds, the edge lengths of the elementary parallelepipeds, the angles between the edges of the elementary parallelepipeds, the number in space of the elementary parallelepipeds, the types and positions of the atoms in the elementary parallelepipeds, the dislocation density of the atoms, the composition distribution of the atoms as a function of position, the stresses in a cluster, and the magnetic properties of a cluster.

**12.** An apparatus according to any of claims 9 - 11, comprising means for tilting the sample.

**13.** The use of the method according to any of claims 1 - 8 or the apparatus according to any of claims 9 - 12 for analysing or modelling substitute solutions, composition gradients, crystal defects, domain walls, thin films, multi-layer structures, small particles, or magnetic materials.

**Patentansprüche**

**1.** Verfahren zum Analysieren eines fehlgeordneten Materials unter Verwendung eines Computers, wobei das Verfahren umfasst:

a) Definieren eines Streuclusters, das aus elementaren Parallelepipeden besteht, welche definierte Hauptachsen und räumliche Positionen haben,

b) Definieren von einem oder mehreren Atomen aus einer gewünschten Gruppe von Atomarten für jedes elementare Parallelepiped, in gewünschten Positionen, oder eines oder mehrere elementare Parallelepipede werden als leer festgesetzt, und

c) Definieren von Zahlenfunktionen $c(i; \kappa; \delta)$, $c(j; \kappa; \delta)$ und $c(k; \kappa; \delta)$ für eine Atomart $\kappa$, wobei i, j und k Indizien für eine Ebene der elementaren Parallelepipede sind, $\kappa$ die Atomart ist und $\delta$ die Position ist,

d) Definieren von gewünschten Eigenschaften des Clusters als Funktionen der Zahlenfunktionen der Atome der Atomarten $\kappa$, denen in Speichermitteln des Computers Anfangswerte dergestalt gegeben werden, dass nach den Stufen a) bis d) die elementaren Parallelepipede ein fehlgeordnetes Cluster ausbilden, und wobei das Verfahren des Weiteren umfasst

e) Berechnen des Streuvermögens des Clusters für eine gewünschte Strahlung mit Hilfe der Eigenschaften des Clusters, und

f) Vergleichen des berechneten Streuvermögens mit einem Wert, der durch Messen des Streuvermögens einer Probe erhalten wird, damit die Notwendigkeit der Anpassung von mindestens einem Parameter des Streuclusters in den Schritten a bis d bestimmt wird, wenn der Unterschied zwischen dem berechneten und dem gemessenen Streuvermögen größer als ein zuvor definierter Wert ist, um ein Analyseergebnis für das fehlgeordnete Material zu erhalten.

**2.** Verfahren nach Anspruch 1, wobei der mindestens eine Parameter in den Schritten a bis d angepasst wird, wenn der Unterschied zwischen dem berechneten und gemessenen Streuvermögen größer als der zuvor definierte Wert ist.

**3.** Verfahren nach Anspruch 1 oder 2, wobei die Parameter in den Speichermitteln gespeichert werden, wenn der Unterschied zwischen dem berechneten und gemessenen Streuvermögen kleiner als der zuvor definierte Wert ist.

**4.** Verfahren nach Anspruch 1 oder 2, wobei die Parameter mindestens eines der folgenden umfassen: die räumlichen Positionen der elementaren Parallelepipede, die Gitterparameter der elementaren Parallelepipede, die Kantenlängen der elementaren Parallelepipede, die Winkel zwischen den Kanten der elementaren Parallelepipede, die Anzahl im Raum der elementaren Parallelepipede, die Arten und Positionen der Atome in den elementaren Parallelepipeden, die Versetzungsdichte der Atome, die Verteilung der Zusammensetzung der Atome als eine Funktion der Position, die Positionen der Atome an den Grenzflächen, die Spannungen in einem Cluster und die magnetischen Eigenschaften eines Clusters.

**5.** Verfahren nach einem der vorstehenden Ansprüche, wobei die in Stufe d) definierten Clustereigenschaften mindestens eines der Nachfolgenden umfassen:

- Gitterkonstanten der elementaren Parallelepipede,
- magnetische Eigenschaften der elementaren Parallelepipede.

**6.** Verfahren nach einem der vorstehenden Ansprüche, umfassend das Definieren in Stufe c) der Anzahl von jeder Atomart an jeder räumlichen Position auf den Raumebenen parallel zu den Ebenen, die durch die Hauptpaare der Achsen der elementaren Parallelepipede definiert werden.

**7.** Verfahren nach Anspruch 1, umfassend das Neigen auf eine zuvor definierte Art, wenn der Unterschied zwischen dem gemessenen und berechneten Streuvermögen größer als ein zuvor definierter Wert ist.

8. Verfahren nach Anspruch 1, umfassend das Wiederholen der Messung der Probe unter Verwendung veränderter Messungsparame-ter, wenn der Unterschied zwischen dem gemessenen und berechneten Streuvermögen größer als ein zuvor definierter Wert ist.

9. Vorrichtung zum Analysieren eines fehlgeordneten Materials, umfassend:

   - Mittel zum Messen von Streuvermögen einer Probe, welche ein fehlgeordnetes Material enthält,
   - Speichermittel zum Speichern des gemessenen Streuvermögens,
   - eine Datenverarbeitungseinheit, welche Mittel zum Modellieren der Probe enthält und welche Parameter enthält, oder in welche als Parameter eingegeben werden können
   - Daten in einem Streucluster, welches aus elementaren Parallelepipeden besteht, welche definierte Hauptachsen, räumliche Positionen und Kantenlängen haben,
   - Daten über ein oder mehrere Atome oder leere Atompositionen, die zu einem elementaren Parallelepiped gehören, mit Hilfe der Zahlenfunktionen c(i; $\kappa$; $\delta$), c(j; $\kappa$; $\delta$) und c(k; $\kappa$; $\delta$), wobei i, j und k Indizien für eine Ebene der elementaren Parallelepipede sind, $\kappa$ die Atomart ist und $\delta$ die Position ist,
   - gewünschte Eigenschaften des Clusters als eine Funktion der Zahlenfunktionen der Atome der Atomart $\kappa$, dergestalt dass die elementaren Parallelepipede ein fehlgeordnetes Cluster ausbilden, und wobei die Datenverarbeitungseinheit des Weiteren eingerichtet ist, um das Streuvermögen des Clusters für eine gewünschte Strahlung aufgrund der Eigenschaften des Clusters zu berechnen, das gemessene Streuvermögen einer Probe aus dem Speichermedium zu lesen und sie mit dem berechneten Streuvermögen zu vergleichen, damit die Notwendigkeit der Anpassung von mindestens einem Parameter des Streuclusters bestimmt wird, wenn der Unterschied zwischen dem berechneten und gemessenen Streuvermögen größer als ein zuvor definierter Wert ist, um ein Analyseergebnis für das fehlgeordnete Material zu erhalten, und um dieses in dem Speichermedium zu speichern.

10. Vorrichtung nach Anspruch 9, wobei die Datenverarbeitungseinheit eingerichtet ist, um automatisch den mindestens einen Parameter anzupassen und das Streuvermögen erneut zu berechnen, wenn der Unterschied zwischen dem berechneten und gemessenen Streuvermögen größer als der zuvor definierte Wert ist.

11. Vorrichtung nach Anspruch 10, wobei die Parameter mindestens eines der folgenden umfassen: die räumlichen Positionen der elementaren Parallelepipede, die Gitterparameter der elementaren Parallelepipede, die Kantenlängen der elementaren Parallelepipede, die Winkel zwischen den Kanten der elementaren Parallelepipede, die Anzahl im Raum der elementaren Parallelepipede, die Arten und Positionen der Atome in den elementaren Parallelepipeden, die Versetzungsdichte der Atome, die Verteilung der Zusammensetzung der Atome als eine Funktion der Position, die Spannungen in einem Cluster und die magnetischen Eigenschaften eines Clusters.

12. Vorrichtung nach einem der Ansprüche 9 bis 11, Mittel zum Neigen der Probe umfassend.

13. Verwendung des Verfahrens nach einem der Ansprüche 1 bis 8 oder der Vorrichtung nach einem der Ansprüche 9 bis 12 zum Analysieren oder Modellieren von Ersatzlösungen, Zusammensetzungsgradienten, Kristalldefekten, Bloch-Wänden, Dünnfilmen, mehrschichtigen Strukturen, kleinen Teilchen oder magnetischen Materialien.

**Revendications**

1. Procédé d'analyse d'un matériau désordonné en utilisant un ordinateur, le procédé comprenant les étapes consistant à :

   a) définir un amas de dispersion, qui est constitué de parallélépipèdes élémentaires, qui ont des axes principaux et des positions dans l'espace définis,
   b) définir un ou plusieurs atomes issus d'un ensemble souhaité de types d'atomes pour chaque parallélépipède élémentaire dans des positions souhaitées ou un ou plusieurs parallélépipèdes élémentaires qui est ou sont réglés pour être vides, et
   c) définir des fonctions numériques $c(i\,;\,\kappa\,;\,\lambda)$, $c(j\,;\,\kappa\,;\,\lambda)$ et $c(k\,;\,\kappa\,;\,\lambda)$ pour un type d'atome $\kappa$, dans lesquelles i, j et k sont des indices plans des parallélépipèdes élémentaires, $\kappa$ est le type d'atome et $\lambda$ la position,
   d) définir les propriétés souhaitées de l'amas en fonction des fonctions numériques des atomes desdits types d'atome $\kappa$, auxquels on donne des valeurs initiales,
   sur des moyens de stockage de l'ordinateur, de sorte qu'après les étapes a) à d), les parallélépipèdes élémentaires forment un amas désordonné, et le procédé comprenant en outre les étapes consistant à :
e) calculer le pouvoir de dispersion de l'amas pour un rayonnement souhaité à l'aide des propriétés de l'amas, et
f) comparer le pouvoir de dispersion calculé à une valeur obtenue en mesurant le pouvoir de dispersion d'un échantillon afin de déterminer le besoin d'ajustement d'au moins un paramètre dudit amas de dispersion aux étapes a) à d) si la différence entre le pouvoir de dispersion calculé et le pouvoir de dispersion mesuré est supérieure à une valeur prédéfinie pour obtenir un résultat d'analyse pour ledit matériau désordonné.

2. Procédé selon la revendication 1, dans lequel ledit au moins un paramètre aux étapes a) à d) est ajusté si la différence entre le pouvoir de dispersion calculé et le pouvoir de dispersion mesuré est supérieure à ladite valeur prédéfinie.

3. Procédé selon la revendication 1 ou la revendication 2, dans lequel lesdits paramètres sont stockés sur les moyens de stockage si la différence entre le pouvoir de dispersion calculé et le pouvoir de dispersion mesuré est inférieure à ladite valeur prédéfinie.

4. Procédé selon la revendication 1 ou la revendication 2, dans lequel lesdits paramètres comprennent l'un des suivants : les positions dans l'espace des parallélépipèdes élémentaires, les paramètres de réseau des parallélépipèdes élémentaires, les longueurs de bords des parallélépipèdes élémentaires, les angles entre les bords des parallélépipèdes élémentaires, le nombre dans l'espace des parallélépipèdes élémentaires, les types et les positions des atomes dans les parallélépipèdes élémentaires, la densité de dislocation des atomes, la composition, la distribution de composition des atomes en fonction de la position, les positions des atomes sur les surfaces limites, les contraintes dans un amas et les propriétés magnétiques d'un amas.

5. Procédé selon l'une quelconque des revendications précédentes, dans lequel les propriétés de l'amas définies à l'étape d) comprennent au moins l'une des suivantes :

   - des constantes de réseau des parallélépipèdes élémentaires, et
   - des propriétés magnétiques des parallélépipèdes élémentaires.

6. Procédé selon l'une quelconque des revendications précédentes, comprenant la définition à l'étape c) du nombre de chaque type d'atome dans chaque position sur les plans spatiaux parallèles aux plans définis par les paires principales d'axes des parallélépipèdes élémentaires.

7. Procédé selon la revendication 1, comprenant une inclinaison de manière prédéfinie si la différence entre le pouvoir de dispersion mesuré et le pouvoir de dispersion calculé est supérieure à une valeur prédéfinie.

8. Procédé selon la revendication 1, comprenant la répétition de la mesure de l'échantillon en utilisant des paramètres de mesure modifiés si la différence entre le pouvoir de dispersion mesuré et le pouvoir de dispersion calculé est supérieure à une valeur prédéfinie.

9. Appareil d'analyse d'un matériau désordonné, comprenant :

   - des moyens pour mesurer le pouvoir de dispersion d'un échantillon contenant un matériau désordonné,
   - des moyens de stockage pour stocker le pouvoir de dispersion mesuré,
   - une unité de traitement de données qui contient des moyens de modélisation dudit échantillon et qui contient ou à laquelle peuvent être délivrées :
   - des données sur un amas de dispersion, qui est constitué de parallélépipèdes élémentaires qui ont des axes principaux, des positions dans l'espace et des longueurs de bords définis,
   - des données sur une ou plusieurs positions d'atomes ou positions d'atomes vides appartenant à un parallélépipède élémentaire, à l'aide des fonctions numériques $c(i ; K ; \lambda)$, $c(j ; K ; \lambda)$ et $c(k ; \kappa ; \lambda)$, dans lesquelles i, j et k sont les indices plans des parallélépipèdes élémentaires, K est le type d'atome et $\lambda$ la position, et
   - des propriétés souhaitées de l'amas en fonction des fonctions numériques des atomes du type d'atome K, de manière que les parallélépipèdes élémentaires forment un amas désordonné, et laquelle unité de traitement de données est en outre à même de calculer le pouvoir de dispersion de l'amas pour un rayonnement souhaité sur la base des propriétés de l'amas, de lire ledit pouvoir de dispersion mesuré d'un échantillon dans le support de stockage et de le comparer au pouvoir de dispersion calculé afin de déterminer le besoin d'ajustement d'au moins un paramètre dudit amas de dispersion si la différence entre le pouvoir de dispersion calculé et le pouvoir de dispersion mesuré est supérieure à une valeur prédéfinie pour obtenir un résultat d'analyse pour ledit matériau désordonné, et de stocker celui-ci sur le support de stockage.

**10.** Appareil selon la revendication 9, dans lequel l'unité de traitement de données est à même d'ajuster automatiquement ledit au moins un paramètre et de recalculer le pouvoir de dispersion si la différence entre le pouvoir de dispersion calculé et le pouvoir de dispersion mesuré est supérieure à ladite valeur prédéfinie.

**11.** Appareil selon la revendication 10, dans lequel lesdits paramètres comprennent l'un des suivantes : les positions dans l'espace des parallélépipèdes élémentaires, les paramètres de réseau des parallélépipèdes élémentaires, les longueurs de bords des parallélépipèdes élémentaires, les angles entre les bords des parallélépipèdes élémentaires, le nombre dans l'espace des parallélépipèdes élémentaires, les types et les positions des atomes dans les parallélépipèdes élémentaires, la densité de dislocation des atomes, la distribution de composition des atomes en fonction de la position, les contraintes dans un amas et les propriétés magnétiques d'un amas.

**12.** Appareil selon l'une quelconque des revendications 9 à 11, comprenant des moyens pour incliner l'échantillon.

**13.** Utilisation du procédé selon l'une quelconque des revendications 1 à 8 ou appareil selon l'une quelconque des revendications 9 à 12 pour analyser ou modéliser des solutions de substitution, des gradients de composition des défauts cristallins, des parois de domaine, des couches minces, des structures à couches multiples, de petites particules ou des matériaux magnétiques.

```
┌─────────────────────────────┐
│ Model                    1  │
└─────────────────────────────┘
              │
              ▼
┌─────────────────────────────┐
│ Simulation               2  │
└─────────────────────────────┘
              │
              ▼
┌─────────────────────────────┐
│ Comparison               3  │
└─────────────────────────────┘
              │
              ▼
┌─────────────────────────────┐
│ Physical parameters      4  │
└─────────────────────────────┘
```

Fig. 1

Crowded area

Deficit area

Fig. 2a          Fig. 2b

Fig. 3a

Fig. 3b

Fig. 3c

Fig. 4

Fig. 5

**180° wall**

Fig. 6a

**90° wall**

Fig. 6b

↑ Magnetic moment

Néel wall

Bloch wall

Fig. 7a

Fig. 7b

Fig. 8

Fig. 9

Fig. 10

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6430256 B
- US 2007270397 A
- US 5200910 A

### Non-patent literature cited in the description

- Tables for Crystallography, Volume C: Mathematical, Physical, and Chemical Tables. Kluwer Academic Publishers, vol. C
- **CASTRO et al.** Numerical simulation of small angle scattering (SAXS) for large atomic clusters. *J. EL. Spec.,* 2008, vol. 166-167, 21-27
- **WELBERRY, T. R. et al.** A Paracrystalline Description of Defect Distributions in Wüstite. *Solid State Chem.,* 1995, vol. 117, ISSN 0022-4596, 398-406
- **L. S. LEVIN ; G. KIMMEL.** Quantitative X-ray Diffractometry. Springer-Verlag Inc, 1995, 264-266
- International Tables for Crystallography, Volume C: Mathematical, Physical, and Chemical Tables. Kluwer Academic Publishers, vol. C